# EUROPEAN PATENT SPECIFICATION

(11) **EP 4 474 751 B1**
(45) Date of publication and mention of the grant of the patent: **18.11.2026**
(21) Application number: 24176407.5
(22) Date of filing: 16.05.2024
(51) Int. Cl.: F41G 1/44, F41G 1/38, F41G 1/473, G02B 27/64, G02B 26/08

(54) **RIFLE COMPRISING A RIFLE SCOPE AND METHOD FOR ELECTRONIC COMPENSATION OF PARALLAX ERRORS IN DIRECT-VIEW RIFLE SCOPES**
GEWEHR MIT ZIELFERNROHR UND VERFAHREN ZUR ELEKTRONISCHEN KOMPENSATION VON PARALLAXFEHLERN IN DIREKTANSICHTSGEWEHRZIELFERNROHREN
FUSIL ÉQUIPÉ D'UNE LUNETTE DE VISÉE ET PROCÉDÉ DE COMPENSATION ÉLECTRONIQUE D'ERREURS DE PARALLAXE DANS DES LUNETTES DE FUSIL À VUE DIRECTE

(30) Priority: 26.05.2023 US 202318202494
(43) Date of publication of application: 11.12.2024
(73) Proprietor: Raytheon Canada Limited, Ottawa, ON K1R 7X7 (CA)
(72) Inventor: SZAPIEL, Stan, Ontario, K1R 7X7 (CA); WAGNER, Kevin, Ontario, K1R 7X7 (CA)
(74) Representative: Crowell & Moring U.K. LLP

(56) References cited:
- CN-A- 108 731 542
- CN-A- 114 459 292
- US-A1- 2005 039 370
- US-A1- 2018 252 500
- US-B1- 8 363 321
- US-B2- 9 335 124

## Description

### Technical Field:

The present disclosure relates to rifles comprising rifle scopes and methods for dynamic parallax compensation.

### BACKGROUND

When using personal targeting systems, such as rifle scopes, motion parallax can cause errors in aiming and lead to missed targets. The target's location influences this parallax error in relation to the aiming reticule, which is projected through the front optics of the scope. Additionally, parallax error can be affected by changes in local temperature. Completely and quickly eliminating parallax errors in all operational conditions remains an important and unsolved practical issue.

US 8 363 321 B1 relates to an apparatus for introducing external aimpoint corrections into a standalone day sight.

US 9 335 124 B2 relates to a riflescope display adapter configured to receive externally computed aimpoint information while affixed to a riflescope, and project an aimpoint symbol based on the received aimpoint information such that the symbol overlays an image visible through the eyepiece of the riflescope.

### SUMMARY

According to one aspect of the subject matter described in this disclosure, an example rifle is provided. The rifle includes a rifle scope including a front optics and back optics for imaging a remote object. A parallax compensating device is coupled to the rifle scope. The parallax compensating device determines a zero-parallax setting distance to compensate parallax errors associated with imaging a remote object. The parallax compensating device removes, using the zero-parallax setting distance, the parallax errors dynamically in real time even if a user's head or eyes are misaligned and temperature at the rifle scope or rifle changes.

In some implementations, the front optics may include an objective lens and other lenses and/or prisms located between the objective lens and a reticule. The back optics may include an eyepiece. The front optics may include at least one temperature sensor for determining temperature data of the rifle scope or surrounding environment. The parallax compensating device may include a processing system to determine the zero-parallax setting distance based on target range data of the remote object, temperature data of the rifle scope or rifle, and calibrated data from at least one calibrated look-table stored in the processing system. The parallax compensating device includes an external tunable optics module (TOM) having the refractive plates. The TOM may be coupled to at least one actuator to move the refractive plates. The processing system may send signals to the at least one actuator to move the refractive plates to tune its refractive power to reflect the zero-parallax setting distance. The parallax compensation device may cancel both temperature-dependent and temperature-independent sources of the parallax error.

According to another aspect of the subject matter described in this disclosure, an example method for dynamic parallax compensation is provided. The method includes the following: providing a front optics and a back optics of an optical system for imaging a remote object; coupling a parallax compensating device to the front optics; determining, using the parallax compensating device, a zero-parallax setting distance to compensate parallax errors associated with imaging a remote object; and removing, using the zero-parallax setting distance, the parallax errors dynamically in real time even if a user is misaligned and temperature at the front optics or the optical system changes.

In some implementations, the front optics includes an objective lens and other lenses and/or prisms located between the objective lens and a reticule plane. The back optics includes an eyepiece. The front optics may include at least one temperature sensor for determining temperature data of the front optics or optical system.

In some implementations, the parallax compensating device may include a processing system to determine the zero-parallax setting distance based on target range data of the remote object, temperature data of the rifle scope or surrounding environment, and calibrated data from at least one calibrated look-table stored in the processing system. The parallax compensating device includes external tunable optics module (TOM) having the refractive plates. The TOM may be coupled to at least one actuator to move the refractive plates. The processing system may send signals to the at least one actuator to move the refractive plates to tune its refractive power to reflect the zero-parallax setting distance. The parallax compensation device may cancel both temperature-dependent and temperature-independent sources of the parallax error.

According to another aspect of the subject matter described in this disclosure, an example system for dynamic parallax compensation is provided. The system includes a tunable optics module (TOM) for focusing at least one image of a remote target to a reticule plane of a front optics of an optical device. The TOM includes refractive plates for tuning the refractive power of the TOM and is coupled to at least one actuator. A processing device for receiving data regarding the remote object and determining a zero-parallax setting distance from the received data to compensate for parallax error in imaging the remote object. The processing device is configured to send signals to the at least one actuator to adjust the refractive plates for tuning the refractive power of the TOM to reflect the zero-parallax setting distance to compensate for the parallax error.

In some implementations, the TOM is positioned on the front optics of the optical device. The processing device may be an embedded processor. Each of the refractive plates may include a diffraction-limited surface.

Additional features and advantages of the present disclosure is described in, and will be apparent from, the detailed description of this disclosure.

### BRIEF DESCRIPTION OF THE DRAWINGS

The disclosure is illustrated by way of example, and not by way of limitation, in the figures of the accompanying drawings in which like reference numerals are used to refer to similar elements. It is emphasized that various features may not be drawn to scale and the dimensions of various features may be arbitrarily increased or reduced for clarity of discussion.
Fig. 1 is a schematic block diagram of an example parallax compensation system.
Fig. 2 is a schematic diagram of an example rifle connected to a parallax compensation system.
Fig. 3 is a process flowgraph of operations included in an example process for dynamic parallax compensation.

### DETAILED DESCRIPTION

The figures and descriptions provided herein may have been simplified to illustrate aspects that are relevant for a clear understanding of the herein described devices, systems, and methods, while eliminating, for the purpose of clarity, other aspects that may be found in typical similar devices, systems, and methods. Those of ordinary skill may recognize that other elements and/or operations may be desirable and/or necessary to implement the devices, systems, and methods described herein. But because such elements and operations are well known in the art, and because they do not facilitate a better understanding of the present disclosure, a discussion of such elements and operations may not be provided herein. However, the present disclosure is deemed to inherently include all such elements, variations, and modifications to the described aspects that would be known to those of ordinary skill in the art.

The terminology used herein is for the purpose of describing particular example implementations only and is not intended to be limiting. For example, as used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Although the terms first, second, third, etc., may be used herein to describe various elements, components, regions, layers and/or sections, these elements, components, regions, layers and/or sections should not be limited by these terms. These terms may be only used to distinguish one element, component, region, layer or section from another element, component, region, layer or section. That is, terms such as "first," "second," and other numerical terms, when used herein, do not imply a sequence or order unless clearly indicated by the context.

This disclosure describes a system and method for compensating for parallax in rifle scopes. The system includes an external Tunable Optical Module (TOM) attached to the scope's front optics. The TOM has refractive plates that focus the image of a distant target onto the aiming reticule. An onboard computer is connected to the TOM and can access calibrated look-up tables. The onboard computer also receives temperature data from internal temperature sensors that monitor the rifle and environment and the distant target range data. The computer determines the zero-parallax setting distance and adjusts the TOM's refractive power with one or more actuators using the temperature, target range, and calibration data. As a result, the images of the distant target are focused back onto the reticle, eliminating parallax even when the operator moves their head or eyes.

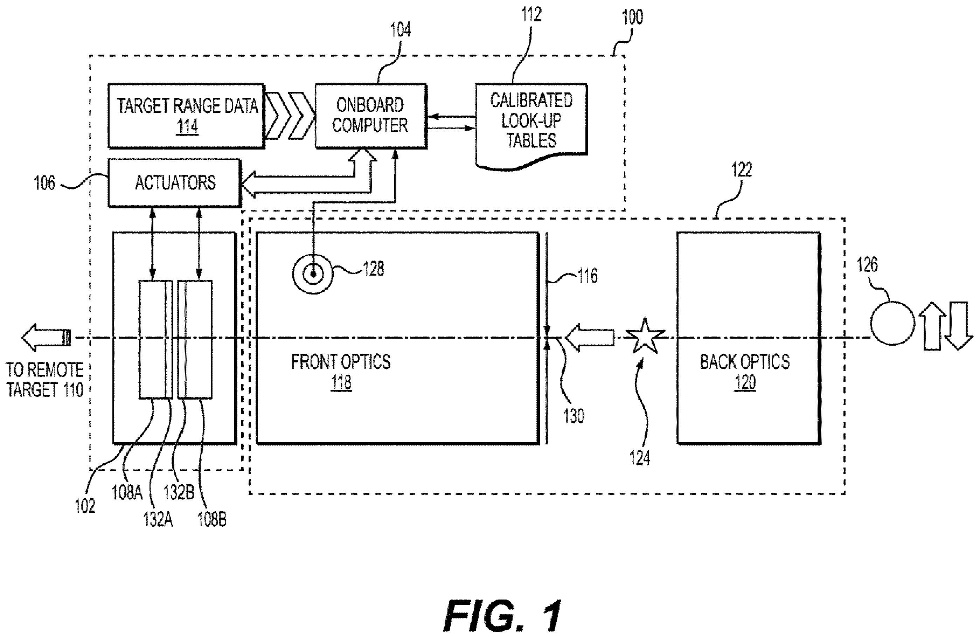

Fig. 1 is a schematic block diagram of an example parallax compensation system 100. Parallax compensation system 100 is attached to the front of a rifle scope to compensate for the parallax associated with the displacement or difference in the apparent position of remote object 110 viewed along two different lines of sight and is measured by the angle or half-angle of inclination between those two lines. The parallax compensation system 100 includes a tunable optics module (TOM) 102, an onboard computer 104, and actuators 106. TOM 102 includes several refractive plates 108A and 108B to tune its refractive power to focus the images of a remote target 110.

In some implementations, refractive plates 108A and 108B may include flat surfaces 132A and 132B to tune their refractive power. Flat surfaces 132A and 132B may be freeform lenses (Alvarez type), flat diffractive surfaces, flat metasurfaces, or a combination thereof.

The refractive plates 108A and 108B can be moved by actuators 106, which follow instructions from the onboard computer 104. Actuators 106, which may include microelectromechanical systems (MEMS) actuators, convert electrical signals into mechanical movements of refractive plates 108A and 108B. These actuators can shift the refractive plates 108A and 108B vertically or rotate them to adjust the refractive power of TOM 102. Alternatively, actuators 106 can be electrostatic, electrothermal, electromagnetic, or piezoelectric.

Onboard computer 104 includes one or more processors capable of controlling and performing the required operations and memories for storing applications and relevant data. Also, onboard computer 104 includes calibrated look-up tables 112, stored in its memory and connected to TOM 102. In some implementations, onboard computer 104 may be an embedded processor or the like placed within parallax compensation system 100. In other implementations, onboard computer 104 may be external to parallax compensation system 100. In this instance, parallax compensation system 100 may include wireless capabilities to receive and send data to onboard computer 104.

Moreover, onboard computer 104 may receive target range data of remote object 110. In some instances, the target range data 114 may be GPS data of remote object 110. The target range data 114 may be from a remote source, such as an external drive or the like. To determine the zero-parallax setting distance, the onboard computer 104 requires the target range data 114, the internal temperature information of rifle scope 122, and calibration data from the calibrated look-up tables 112. The computer then sends signals or commands to actuators 106 to move refractive plates 108A and 108B, which helps to reflect the zero-parallax setting distance at TOM 102. This results in image 124 of the remote target 110 being in focus on the aiming reticle 116. By bringing image 124 to a focal plane 130 that contains aiming reticule 116, no parallax is observed, which eliminates parallax error.

An updater can be utilized in certain implementations to keep target range data 114 and calibrated look-up tables 112 up to date. This updater may be housed in the onboard computer 104 or accessed externally from another computer.

The rifle scope 122 has two sets of optics: front optics 118 and back optics 120. Front optics 118 consists of lenses and/or prisms between the objective and the reticule plane 116. Additionally, front optics 118 has one or more local internal temperature sensors 128 that provide the internal temperature data of front optics 118 or rifle to onboard computer 104. In this particular implementation, TOM 102 is located in front of front optic 118. In other implementations, internal temperature sensors 128 may be placed inside TOM 102 or other locations in rifle scope 122.

Onboard computer 104 uses internal temperature information received from internal temperature sensors 128 in conjunction with target range data 114 and calibrated look-up tables 112 to determine zero-parallax setting distance. Back optics 120 may include an eyepiece of the rifle scope and any additional optics for imaging a remote target 110. An operator's head or eyes 126 is positioned at a distal side of back optics 120.

Parallax compensation system 100 eliminates parallax errors caused by temperature-dependent and temperature-independent sources. It can dynamically remove parallax in real time, even if the operator's head or eyes are misaligned and the temperature changes. Moreover, parallax compensation system 100 can be easily added to any existing rifle scope without requiring extensive internal modifications or redesigning the current scope.

Although used with a rifle in this instance, the parallax compensation system 100 can also be used with other firearms with an imaging component, such as rifle scope 122. Additionally, parallax compensation system 100 can be applied to other optical systems and devices, such as telescopes. Like the example described, parallax compensation system 100 is connected to the front optics of these systems and devices.

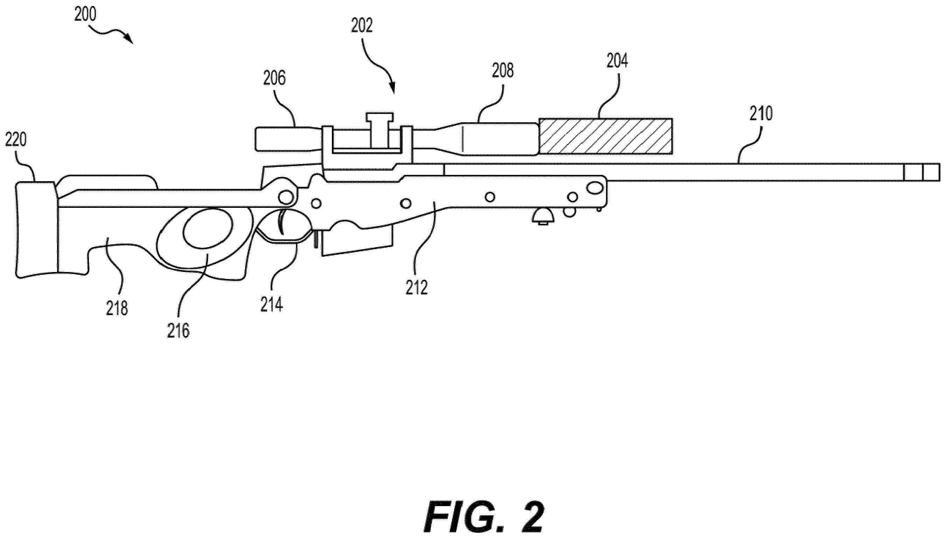

Fig. 2 is a schematic diagram of an example rifle 200 connected to a parallax compensation system 202. The rifle 200 includes a rifle scope 202, a barrel 210, a chamber 212, a trigger 214, a gripper 216, a stock 218, and a recoil pad 220. Rifle scope 202 is positioned above chamber 212 to allow a user to identify a remote object using rifle scope 212. Note rifle scope 202 is similar to rifle scope 122 of Fig. 1, including having similar components, such as a front optics 206 and a back optics 208. Moreover, a parallax compensation system 204 is connected to rifle scope 202 via front optics 206. Parallax compensation system 204 is like parallax compensation system 100 of Fig. 1, including having similar components for removing parallax error when imaging a remote object at rifle scope 202.

The components of parallax compensation system 204 are placed internally in this implementation. However, in other implementations, specific components, like onboard computer 104, may be external to parallax compensation system 204. If this is the case, parallax compensation system 204 and external components may have wireless capabilities to communicate with each other.

While rifle 200 is a specific rifle implementation, one may use other rifle implementations. Different rifle scopes may use parallax compensation system 202 beside rifle scope 202 shown in Fig. 2. Parallax compensation system 202 can be added as an external modular upgrade to any existing rifle scope which does not have parallax adjustment capabilities. There is no need for extensive internal modifications and/or a total redesign of the current rifle scope.

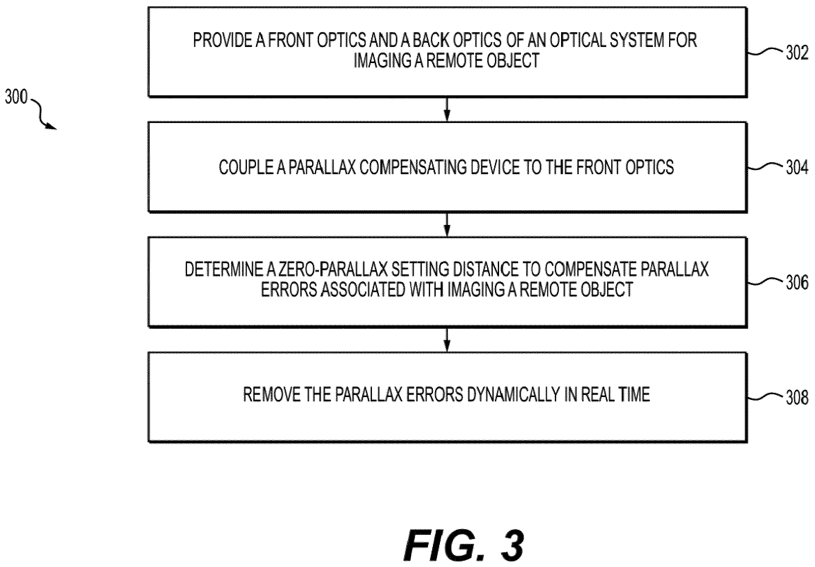

Fig. 3 is a process flowgraph of operations included in an example process 300 for dynamic parallax compensation. Process 300 includes providing a front optics (such as front optics 118, Fig. 1) and a back optics (such as back optics 120, Fig. 1) of an optical system (such as rifle scope 124, Fig. 1) for identifying and imaging a remote object (such as remote object 110, Fig. 1) (Step 302). Process 300 includes coupling a parallax compensating device to the front optics (Step 304). Process 300 includes determining, using the parallax compensating device, a zero-parallax setting distance (such as zero-parallax setting distance, FIG. 1) to compensate parallax errors associated with imaging a remote object (Step 306). Process 300 includes removing, using the zero-parallax setting distance, the parallax errors dynamically in real time even if a user is misaligned and temperature at the front optics or optical system changes (Step 308).

In some implementations, the front optics includes an objective lens and other lenses and/or prisms located between the objective lens and a reticule plane. The back optics includes an eyepiece. The front optics may include at least one temperature sensor for determining temperature data of the front optics or optical system.

In some implementations, the parallax compensating device may include a processing system to determine the zero-parallax setting distance based on target range data of the remote object, temperature data of the rifle scope or rifle, and calibrated data from at least one calibrated look-table stored in the processing system. The parallax compensating device includes external tunable optics module (TOM) having the refractive plates. The TOM may be coupled to at least one actuator to move the refractive plates. The processing system may send signals to the at least one actuator to move the refractive plates to tune its refractive power to reflect the zero-parallax setting distance. The parallax compensation device may cancel both temperature dependent and temperature independent sources of the parallax error.

This document explains a parallax compensating system and technique for adjusting parallax in rifle scopes and optical devices. This system has several benefits, including correcting both temperature-related and independent sources of parallax error and dynamically adjusting parallax in real time even if the user's eyes or head are not aligned or the temperature changes. Additionally, this system can be easily added to any existing scope or optical device without significant internal modifications or a complete redesign.

Finally, the above descriptions of the implementations of the present disclosure have been presented for the purposes of illustration and description. Many modifications and variations are possible in light of the above teaching. It is intended that the scope of the present disclosure be limited not by this detailed description, but rather by the claims of this application. Accordingly, the present disclosure is intended to be illustrative, but not limiting, of the scope of the present disclosure, which is set forth in the following claims.

## Claims

1. A rifle comprising:
a rifle scope (122) including a front optics (118) and back optics (120) for imaging a remote object (110); and
a parallax compensating device (100) coupled to the rifle scope, **characterised in that** the parallax compensating device (100) determining a zero-parallax setting distance to compensate parallax errors associated with imaging a remote object (110), wherein the parallax compensating device (100) removes, using the zero-parallax setting distance, the parallax errors dynamically in real time even if a user's head or eyes (126) are misaligned and temperature at the rifle scope (122) or rifle changes.

2. The rifle of claim 1, wherein the front optics (118) comprises an objective lens and other lenses and/or prisms located between the objective lens and a reticule (116), and wherein the back optics (120) optionally comprise an eyepiece.

3. The rifle of claim 1 or 2, wherein the front optics (118) comprises at least one temperature sensor (128) for determining temperature data of the rifle scope (122) or surrounding environment.

4. The rifle of claim 3, wherein the parallax compensating device (100) comprises a processing system (104) to determine the zero-parallax setting distance based on target range data (114) of the remote object (110), temperature data of the rifle scope (122) or rifle, and calibrated data from at least one calibrated look-table (112) stored in the processing system (104).

5. The rifle of claim 4, wherein the parallax compensating device (100) comprises an external tunable optics module, TOM, (102) having refractive plates (108A, 108B), wherein the TOM (102) is coupled to at least one actuator (106) to move the refractive plates, wherein each of the refractive plates optionally comprises a diffraction-limited surface (132A, 132B), and wherein the TOM (102) is optionally positioned on the front optics (118) of the rifle scope (122).

6. The rifle of claim 5, wherein the processing system (104) sends signals to the at least one actuator (106) to move the refractive plates (108A, 108B) to tune its refractive power to reflect the zero-parallax setting distance, and wherein the processing system (104) is optionally an embedded processor.

7. The rifle of any of the preceding claims, wherein the parallax compensating device cancels both temperature-dependent and temperature-independent sources of the parallax error.

8. A method for dynamic parallax compensation, the method comprising:
providing a front optics (118) and a back optics (120) of an optical system for imaging a remote object (110);
coupling a parallax compensating device (100) to the front optics;
determining, using the parallax compensating device (100), a zero-parallax setting distance to compensate parallax errors associated with imaging a remote object (110); and
removing, using the zero-parallax setting distance, the parallax errors dynamically in real time even if a user is misaligned and temperature at the front optics (118) or the optical system changes.

9. The method of claim 8, wherein the front optics (118) comprises an objective lens and other lenses and/or prisms located between the objective lens and a reticule plane, and wherein the back optics (120) optionally comprises an eyepiece.

10. The method of claim 8, wherein the front optics (118) comprises at least one temperature sensor (128) for determining temperature data of a rifle scope (122) or surrounding environment.

11. The method of claim 10, wherein the parallax compensating device (100) comprises a processing system (104) to determine the zero-parallax setting distance based on target range data (114) of the remote object (110), temperature data of the rifle scope (122) or a rifle, and calibrated data from at least one calibrated look-table (112) stored in the processing system (104).

12. The method of claim 11, wherein the parallax compensating device (100) comprises an external tunable optics module, TOM, (102) having refractive plates (108A, 108B), wherein the TOM is coupled to at least one actuator (106) to move the refractive plates (108A, 108B).

13. The method of claim 12, further comprising sending signals, using the processing system (104), to the at least one actuator (106) to move the refractive plates (108A, 108B) to tune its refractive power to reflect the zero-parallax setting distance.

14. The method of claim 8, further comprising canceling, using the parallax compensation device (100), both temperature-dependent and temperature-independent sources of the parallax error.

15. The rifle of claim 5, wherein the processing system (104) is configured to send signals to the at least one actuator (106) to adjust the refractive plates (108A, 108B) for tuning the refractive power of the TOM (102) to reflect the zero-parallax setting distance to compensate for the parallax error.

## Patentansprüche

1. Gewehr, umfassend:
ein Gewehrzielfernrohr (122), das eine vordere Optik (118) und hintere Optik (120) zum Abbilden eines entfernten Objekts (110) beinhaltet; und
eine mit dem Gewehrzielfernrohr gekoppelte Parallaxenkompensationsvorrichtung (100), **dadurch gekennzeichnet, dass** die Parallaxenkompensationsvorrichtung (100) einen Nullparallaxen-Einstellabstand bestimmt, um Parallaxenfehler, die mit Abbilden eines entfernten Objekts (110) verknüpft sind, zu kompensieren, wobei die Parallaxenkompensationsvorrichtung (100) mithilfe des Nullparallaxen-Einstellabstands die Parallaxenfehler dynamisch in Echtzeit beseitigt, selbst wenn Kopf oder Augen (126) eines Benutzers falsch ausgerichtet sind und sich eine Temperatur an dem Gewehrzielfernrohr (122) oder Gewehr ändert.

2. Gewehr nach Anspruch 1, wobei die vordere Optik (118) eine Objektivlinse und weitere Linsen und/oder Prismen umfasst, die sich zwischen der Objektivlinse und einem Fadenkreuz (116) befinden, und wobei die hintere Optik (120) optional ein Okular umfasst.

3. Gewehr nach Anspruch 1 oder 2, wobei die vordere Optik (118) mindestens einen Temperatursensor (128) zum Bestimmen von Temperaturdaten des Gewehrzielfernrohrs (122) oder der Umgebung umfasst.

4. Gewehr nach Anspruch 3, wobei die Parallaxenkompensationsvorrichtung (100) ein Verarbeitungssystem (104) umfasst, um den Nullparallaxen-Einstellabstand basierend auf Zielbereichsdaten (114) des entfernten Objekts (110), Temperaturdaten des Gewehrzielfernrohrs (122) oder des Gewehrs und kalibrierten Daten aus mindestens einer kalibrierten Nachschlagetabelle (112), die in dem Verarbeitungssystem (104) gespeichert ist, zu bestimmen.

5. Gewehr nach Anspruch 4, wobei die Parallaxenkompensationsvorrichtung (100) ein externes abstimmbares Optikmodul, TOM, (102), das Brechungsplatten (108A, 108B) aufweist, umfasst, wobei das TOM (102) mit mindestens einem Aktuator (106) gekoppelt ist, um die Brechungsplatten zu bewegen;
wobei jede der Brechungsplatten optional eine beugungsbegrenzte Oberfläche (132A, 132B) umfasst und wobei das TOM (102) optional auf der vorderen Optik (118) des Gewehrzielfernrohrs (122) positioniert ist.

6. Gewehr nach Anspruch 5, wobei das Verarbeitungssystem (104) Signale an den mindestens einen Aktuator (106) sendet, um die Brechungsplatten (108A, 108B) zu bewegen, um deren Brechkraft so abzustimmen, dass sie den Nullparallaxen-Einstellabstand widerspiegelt, und wobei das Verarbeitungssystem (104) optional ein eingebetteter Prozessor ist.

7. Gewehr nach einem der vorhergehenden Ansprüche, wobei die Parallaxenkompensationsvorrichtung sowohl temperaturabhängige als auch temperaturunabhängige Quellen des Parallaxenfehlers aufhebt.

8. Verfahren zur dynamischen Parallaxenkompensation, wobei das Verfahren Folgendes umfasst:
Bereitstellen einer vorderen Optik (118) und einer hinteren Optik (120) eines optischen Systems zum Abbilden eines entfernten Objekts (110);
Koppeln einer Parallaxenkompensationsvorrichtung (100) an die vordere Optik;
Bestimmen eines Nullparallaxen-Einstellabstands, um Parallaxenfehler zu kompensieren, die mit Abbilden eines entfernten Objekts (110) verknüpft sind, mithilfe der Parallaxenkompensationsvorrichtung (100); und
dynamisches Entfernen der Parallaxenfehler in Echtzeit, mithilfe des Nullparallaxen-Einstellabstands, selbst wenn ein Benutzer falsch ausgerichtet ist und sich die Temperatur an der vorderen Optik (118) oder in dem optischen System ändert.

9. Verfahren nach Anspruch 8, wobei die vordere Optik (118) eine Objektivlinse und weitere Linsen und/oder Prismen umfasst, die sich zwischen der Objektivlinse und einer Fadenkreuzebene befinden, und wobei die hintere Optik (120) optional ein Okular umfasst.

10. Verfahren nach Anspruch 8, wobei die vordere Optik (118) mindestens einen Temperatursensor (128) zum Bestimmen von Temperaturdaten eines Gewehrzielfernrohrs (122) oder einer Umgebung umfasst.

11. Verfahren nach Anspruch 10, wobei die Parallaxenkompensationsvorrichtung (100) ein Verarbeitungssystem (104) umfasst, um den Nullparallaxen-Einstellabstand basierend auf Zielbereichsdaten (114) des entfernten Objekts (110), Temperaturdaten des Gewehrzielfernrohrs (122) oder eines Gewehrs und kalibrierten Daten aus mindestens einer kalibrierten Nachschlagetabelle (112), die in dem Verarbeitungssystem (104) gespeichert ist, zu bestimmen.

12. Verfahren nach Anspruch 11, wobei die Parallaxenkompensationsvorrichtung (100) ein externes abstimmbares Optikmodul, TOM, (102), das Brechungsplatten (108A, 108B) aufweist, umfasst, wobei das TOM mit mindestens einem Aktuator (106) gekoppelt ist, um die Brechungsplatten (108A, 108B) zu bewegen.

13. Verfahren nach Anspruch 12, ferner umfassend Senden von Signalen mittels des Verarbeitungssystems (104) an den mindestens einen Aktuator (106), um die Brechungsplatten (108A, 108B) zu bewegen, um deren Brechkraft so abzustimmen, dass sie den Nullparallaxen-Einstellabstand widerspiegelt.

14. Verfahren nach Anspruch 8, ferner umfassend Aufheben sowohl temperaturabhängiger als auch temperaturunabhängiger Quellen des Parallaxenfehlers mittels der Parallaxenkompensationsvorrichtung (100).

15. Gewehr nach Anspruch 5, wobei das Verarbeitungssystem (104) dazu konfiguriert ist, Signale an den mindestens einen Aktuator (106) zu senden, um die Brechungsplatten (108A, 108B) zum Abstimmen der Brechkraft des TOM (102) anzupassen, um den Nullparallaxen-Einstellabstand widerzuspiegeln, um den Parallaxenfehler zu kompensieren.

## Revendications

1. Fusil comprenant :
une lunette de fusil (122) comportant une optique avant (118) et une optique arrière (120) pour l'imagerie d'un objet distant (110) ; et
un dispositif de compensation de parallaxe (100) couplé à la lunette de fusil, **caractérisé en ce que** le dispositif de compensation de parallaxe (100) détermine une distance de réglage de parallaxe nulle pour compenser des erreurs de parallaxe associées à l'imagerie d'un objet distant (110), dans lequel le dispositif de compensation de parallaxe (100) supprime, en utilisant la distance de réglage de parallaxe nulle, les erreurs de parallaxe de manière dynamique en temps réel même si la tête ou les yeux (126) d'un utilisateur sont mal alignés et que la température au niveau de la lunette de fusil (122) ou du fusil change.

2. Fusil selon la revendication 1, dans lequel l'optique avant (118) comprend une lentille d'objectif et d'autres lentilles et/ou prismes situés entre la lentille d'objectif et un réticule (116), et dans lequel l'optique arrière (120) comprend éventuellement un oculaire.

3. Fusil selon la revendication 1 ou la revendication 2, dans lequel l'optique avant (118) comprend au moins un capteur de température (128) pour déterminer des données de température de la lunette de fusil (122) ou de l'environnement environnant.

4. Fusil selon la revendication 3, dans lequel le dispositif de compensation de parallaxe (100) comprend un système de traitement (104) pour déterminer la distance de réglage de parallaxe nulle sur la base de données de portée de cible (114) de l'objet distant (110), de données de température de la lunette de fusil (122) ou du fusil, et de données étalonnées provenant d'au moins une table de visée étalonnée (112) stockées dans le système de traitement (104).

5. Fusil selon la revendication 4, dans lequel le dispositif de compensation de parallaxe (100) comprend un module optique accordable, TOM, (102) externe présentant des plaques réfractives (108A, 108B), dans lequel le TOM (102) est couplé à au moins un actionneur (106) pour déplacer les plaques réfractives ;dans lequel chacune des plaques réfractives comprend éventuellement une surface à diffraction limitée (132A, 132B), et dans lequel le TOM (102) est éventuellement positionné sur l'optique avant (118) de la lunette de fusil (122).

6. Fusil selon la revendication 5, dans lequel le système de traitement (104) envoie des signaux au au moins un actionneur (106) pour déplacer les plaques réfractives (108A, 108B) afin d'ajuster sa puissance réfractive pour refléter la distance de réglage de parallaxe nulle, et dans lequel le système de traitement (104) est éventuellement un processeur embarqué.

7. Fusil selon l'une quelconque des revendications précédentes, dans lequel le dispositif de compensation de parallaxe annule les sources d'erreur de parallaxe dépendantes de la température et indépendantes de la température.

8. Procédé de compensation dynamique de parallaxe, le procédé comprenant :
la fourniture d'une optique avant (118) et d'une optique arrière (120) d'un système optique pour l'imagerie d'un objet distant (110) ;
le couplage d'un dispositif de compensation de parallaxe (100) à l'optique avant ;
la détermination, en utilisant le dispositif de compensation de parallaxe (100), d'une distance de réglage de parallaxe nulle pour compenser des erreurs de parallaxe associées à l'imagerie d'un objet distant (110) ; et
la suppression, en utilisant la distance de réglage de parallaxe nulle, des erreurs de parallaxe de manière dynamique en temps réel même si un utilisateur est mal aligné et que la température au niveau de l'optique avant (118) ou du système optique change.

9. Procédé selon la revendication 8, dans lequel l'optique avant (118) comprend une lentille d'objectif et d'autres lentilles et/ou prismes situés entre la lentille d'objectif et un plan de réticule, et dans lequel l'optique arrière (120) comprend éventuellement un oculaire.

10. Procédé selon la revendication 8, dans lequel l'optique avant (118) comprend au moins un capteur de température (128) pour déterminer des données de température d'une lunette de fusil (122) ou de l'environnement environnant.

11. Procédé selon la revendication 10, dans lequel le dispositif de compensation de parallaxe (100) comprend un système de traitement (104) pour déterminer la distance de réglage de parallaxe nulle sur la base de données de portée de cible (114) de l'objet distant (110), de données de température de la lunette de fusil (122) ou d'un fusil, et de données étalonnées provenant d'au moins une table de visée étalonnée (112) stockées dans le système de traitement (104).

12. Procédé selon la revendication 11, dans lequel le dispositif de compensation de parallaxe (100) comprend un module optique accordable, TOM, (102) externe présentant des plaques réfractives (108A, 108B), dans lequel le TOM est couplé à au moins un actionneur (106) pour déplacer les plaques réfractives (108A, 108B).

13. Procédé selon la revendication 12, comprenant en outre l'envoi de signaux, en utilisant le système de traitement (104), au au moins un actionneur (106) pour déplacer les plaques réfractives (108A, 108B) afin d'ajuster sa puissance réfractive pour refléter la distance de réglage de parallaxe nulle.

14. Procédé selon la revendication 8, comprenant en outre l'annulation, en utilisant le dispositif de compensation de parallaxe (100), des sources d'erreur de parallaxe dépendantes de la température et indépendantes de la température.

15. Fusil selon la revendication 5, dans lequel le système de traitement (104) est configuré pour envoyer des signaux au au moins un actionneur (106) afin d'ajuster les plaques réfractives (108A, 108B) pour ajuster la puissance réfractive du TOM (102) afin de refléter la distance de réglage de parallaxe nulle pour compenser l'erreur de parallaxe.
